(19) Europäisches Patentamt
European Patent Office
Office européen des brevets

(11) Veröffentlichungsnummer: **0 505 955 A2**

(12) # EUROPÄISCHE PATENTANMELDUNG

(21) Anmeldenummer: **92104952.4**

(51) Int. Cl.$^5$: **C08G 61/12**

(22) Anmeldetag: **23.03.92**

(30) Priorität: **28.03.91 DE 4110263**

(43) Veröffentlichungstag der Anmeldung: **30.09.92 Patentblatt 92/40**

(84) Benannte Vertragsstaaten: **AT BE DE DK ES FR GB IT NL SE**

(71) Anmelder: **HOECHST AKTIENGESELLSCHAFT**
**Postfach 80 03 20**
**W-6230 Frankfurt am Main 80(DE)**

(72) Erfinder: **Kochem, Karl-Heinz, Dr.**
**Eugeniusstrasse 18**
**W-6530 Bingen-Dietersheim(DE)**
Erfinder: **Schmidt, Michael**
**Vollradser Allee 5**
**W-6227 Oestrich-Winkel(DE)**

(54) **Wässrige Dispersion aus intrinsisch elekfrisch leitfähigen Polyalkoxythiophenen, Verfahren zu ihrer Herstellung und ihre Verwendung.**

(57) Es wird eine wässrige Dispersion beschrieben enthaltend elektrisch leitfähiges (dotiertes) Polyalkoxythiophen, das in aprotischen organischen Lösemitteln löslich und in Wasser unlöslich ist. Die Dispersion besitzt einen Restlösemittelgehalt von kleiner/gleich 25 Gew.-%, bezogen auf das Gesamtgewicht der Dispersion. Es wird auch ein Verfahren zur Herstellung dieser Dispersion beschrieben und ihre Verwendung zur Bildung von Überzügen auf Substraten.

EP 0 505 955 A2

Seit einigen Jahren wird weltweit an der Synthese sogenannter »intrinsisch« elektrisch leitfähiger Polymerer gearbeitet. Gemeint sind hiermit polymere Materialien, die ohne Zusatz elektrisch leitfähiger Stoffe wie Metallpulver oder -fasern, Leitruß u. ä. eine Eigenleitfähigkeit besitzen. Beispiele solcher Polymerer sind Polyacetylen, Polypyrrol, Polythiophen, Polyanilin, Polyparaphenylen, Polyphenylensulfid etc. Elektrisch leitfähig sind derartige polykonjugierte Bindungssysteme jedoch nur im sogenannten "dotierten Zustand", d. h. sie müssen mittels eines Oxidations- oder Reduktionsmittels im Rahmen einer elektrochemischen oder chemischen Reaktion in einen leitfähigen Zustand überführt werden. Im dotierten Zustand sind die oben aufgezeigten Materialien jedoch alle unlöslich und unschmelzbar - also für eine Weiterverarbeitung nicht geeignet.

Bis vor wenigen Jahren gab es daher nur wenig konkrete Anwendungsmöglichkeiten für intrinsisch elektrisch leitfähige Polymere. Nachteilig war außerdem die geringe Stabilität der neuen Materialien, insbesondere in feuchten Atmosphären.

Um zu verarbeitbaren elektrisch leitfähigen Polymeren zu kommen, wurden lösliche intrinsisch elektrisch leitfähige Polymere entwickelt (vgl. R. L. Elsenbaumer, K. Y. Jen and R. Oboodi, Synth. Met. 15 (1986), 169), wobei sich vor allem elektrochemisch synthetisierte dotierte Polyalkoxythiophene durch hohe Stabilität auszeichnen (M. Feldhues et al, Synth. Met. 28 (1989), C487). Diese Materialien sind in dotierter Form in organischen aprotischen Lösemitteln wie Toluol, THF, Acetonitril, Dimethylformamid oder N-methyl-pyrrolidon zu geringen Prozentsätzen löslich und eignen sich daher als Basismaterial zur elektrisch leitfähigen und/oder antistatischen Beschichtung von Substraten (EP-A-0 328 981, EP-A-0 257 573, EP-A-0 328 982).

Bei der Herstellung derartiger Beschichtungen im industriellen Maßstab hat es sich jedoch als sehr nachteilig erwiesen, mit organischen Lösemitteln arbeiten zu müssen, weil bei vielen organischen Lösemitteln heute eine technische Nachverbrennung notwendig ist, die sehr teuer und aufwendig ist. Insbesondere für die kontinuierliche Beschichtung flexibler Substrate wie z. B. Folien, wird daher zunehmend versucht, wässrige Systeme zum Einsatz zu bringen, bei denen zumindest ein großer Anteil des organischen Lösemittels durch Wasser ersetzt ist.

Prinzipiell sind zwei Wege denkbar, um zu wässrigen Beschichtungsrezepturen auf Basis intrinsisch elektrisch leitfähiger Polymerer zu gelangen. Zum einen ist dies die Entwicklung neuer, wasserlöslicher leitfähiger Polymerer (A. O. Patil et al, J. Am. Chem. Soc. 109 (1987), 1858; E. E. Havinga et al, Polymer Bulletin 18 (1987), 277; A. O. Patil et al, Synth. Met. 20 (1987), 151). Ein zweiter Weg ist die Herstellung wässriger Dispersionen. Eine industrielle Verwertung der Materialien, die als Ergebnis der Neuentwicklung wasserlöslicher Polymerer bekannt wurden, ist jedoch infolge nur sehr geringer erreichter elektrischer Leitfähigkeiten unterhalb 0,1 S/cm und in Anbetracht schlechter Beständigkeit in Wasser bisher nicht erfolgt.

In S. P. Armes und M. Aldissi, Polymer 31 (1990), 569 wird die Herstellung einer wässrigen Polypyrrol-Dispersion beschrieben. Bei dem beschriebenen Verfahren muß ein sterischer Stabilisator (Poly-2-vinyl-pyridin-butylmethacrylat) hinzugefügt werden, um eine Partikelagglomeration des nur schwer dispergierbaren Polypyrrols zu vermeiden. Die spez. Leitfähigkeit des getrockneten Pulvers liegt bei 1 bis 2 S/cm. Eine Eignung des Materials zu Beschichtungszwecken ist nicht bekannt.

In S. P. Armes et al, J. Coll. Interf. Sci. 118 (1987), 410 wird ebenfalls eine wässrige Polypyrrol-Dispersion beschrieben, bei der als Dispersionsstabilisator Polyvinylacetat eingesetzt wird. Die einzelnen leitfähigen Partikel (nicht die flüssige Dispersion) zeigen eine spez. Leitfähigkeit von 5 S/cm bei einem Partikeldurchmesser von 100 bis 150 nm. Die Eigenschaften dünner Schichten aus diesen Dispersionen sind nicht beschrieben.

In der DE-A-38 34 526 wird die Beschichtung von Substraten mit fließfähigen Dispersionen auf Basis von Polyanilin beschrieben. Hierbei können auch wässrige Medien verwendet werden. Nachteilig ist die Notwendigkeit, daß nach erfolgter Beschichtung und Entfernung des Lösungsmittels die Schicht chemisch oder elektrochemisch in die für die spätere Funktion notwendige leitfähige Form überführt werden muß.

In beiden Fällen werden in der dotierten Form nicht-lösliche intrinsisch leitfähige Polymere verwendet. Wässrige Dispersionen von in organischen Lösemitteln löslichen leitfähigen Polymeren sind nicht bekannt.

Aufgabe der vorliegenden Erfindung war es daher, eine wässrige Dispersion eines intrinsisch elektrisch leitfähigen Polymeren zu schaffen, die weder den Zusatz von Stabilisatoren noch eine nachträgliche Dotierung benötigt und die zur Beschichtung von Substraten zur Erzielung einer elektrisch leitfähigen und/oder antistatischen Schicht geeignet ist.

Gelöst wird diese Aufgabe durch eine wässrige Dispersion enthaltend elektrisch leitfähige Polyalkoxythiophene, die in Wasser unlöslich, aber in dipolar aprotischen organischen Lösemitteln löslich sind, wobei die wässrigen Dispersionen einen Restlösemittelgehalt von maximal 25 % aufweisen.

Die Herstellung geeigneter Polyalkoxythiophene ist in EP-A-0 257 573 beschrieben. Aus dieser

Anmeldung sind intrinsisch elektrisch leitfähige Polymere, vorzugsweise Oligomere, bekannt, die elektrochemisch synthetisiert und in der oxidierten Form in dipolar aprotischen Lösemitteln bei Raumtemperatur vollständig löslich sind und die sich aus Struktureinheiten der Formel:

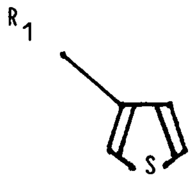

zusammensetzen, worin $R_1$ eine $C_1$- bis $C_{12}$-, vorzugsweise $C_1$- bis $C_4$-Alkoxygruppe bedeutet. Die Monomereinheiten sind in 2-Stellung und/oder 5-Stellung miteinander verbunden.

Die elektrisch leitfähigen Polymeren enthalten in ihrer oxidierten Form zur Kompensation der positiven Ladungen auf der Polymerkette eine entsprechende Anzahl von Anionen, vorzugsweise Anionen des Leitsalzes, das bei dem Elektrolyseherstellverfahren eingesetzt wird. Beispiele sind: $BF_4^-$, $PF_6^-$, $SbF_6^-$, $SbCl_6^-$, $FeCl_4^-$, $[Fe(CN)_6]^{3-}$ usw.

Um zu den erfindungsgemäßen Dispersionen auf wässriger Basis zu gelangen, wird das leitfähige Polymer zunächst in einem dipolar aprotischen Lösemittel (z. B. N-methylpyrrolidon) gelöst. Zusätzlich wird dieser Lösung vorzugsweise noch ein oder mehrere nicht leitfähige Bindemittel zugegeben, die die Aufgabe haben, der späteren Schicht mechanische Stabilität und bessere Haftung zu verleihen. Diese Bindemittel sollten ebenfalls im gleichen Lösemittel und zusätzlich in Wasser löslich oder dispergierbar sein. Die Lösung wird dann tropfenweise in Wasser eingemischt, wobei die entstehende Dispersion permanent durchmischt wird. Der entstehenden Dispersion können gegebenenfalls noch Additive (Verlaufmittel, Netzmittel) hinzugefügt werden.

Die auf diese Weise hergestellte Dispersion weist einen Feststoffgehalt von 2 bis 15 Gew.-% auf, vorzugsweise von 4 bis 8 Gew.-%, jeweils bezogen auf das Gesamtgewicht der Dispersion. Davon bestehen 5 bis 100 Gew.-%, vorzugsweise 10 bis 30 Gew.-%, aus den oben beschriebenen intrinsisch leitfähigen Polyalkoxythiophenen und 0 bis 95 Gew.-%, vorzugsweise 70 bis 90 Gew.-%, aus nicht-leitfähigen Bindemitteln und sonstigen Additiven. Der Wassergehalt beträgt 95 bis 75 Gew.-%, vorzugsweise 80 bis 90 Gew.-%; der Restlösemittelgehalt liegt zwischen 5 und 25 Gew.-%, vorzugsweise zwischen 10 und 20 Gew.-%.

Die erfindungsgemäße Dispersion eignet sich vor allem zum Beschichten unterschiedlichster Substrate, vorzugsweise Folien aus Polyester, Polypropylen, Polyvinylchlorid, Polyacetat, Polyethylen, Polycarbonat und Polyamid, mittels üblicher Lackantragsverfahren wie Tauchverfahren, Spritzverfahren und unterschiedlicher Druckverfahren wie z. B. Glattwalzenantrag, Rasterwalzenantrag, Tiefdruck und Flexodruck. Insbesondere ist die erfindungsgemäße Dispersion zur kontinuierlichen Beschichtung von Folienbahnen geeignet. In Schichten von Dicken unterhalb 1 $\mu$m, vorzugsweise 50 bis 500 nm, können so antistatische, transparente Schichten mit Oberflächenwiderständen zwischen $10^4$ und $10^9$ Ohm, vorzugsweise zwischen $10^6$ und $10^8$ Ohm (DIN 53482), und einer Transparenz zwischen 50 % und 98 % (ASTM 1003-61) hergestellt werden.

Folien, die derart mit einer antistatischen Schicht versehen sind, können vorteilhaft zu Verbundfolien weiterverarbeitet werden, wobei vorzugsweise eine mittels Kleberkaschierung aufgebrachte Folie aus einem siegelfähigen Material, vorzugsweise Polyethylen, verwendet werden kann. Ein solcher Folienverbund kann beispielsweise aus einer mit der erfindungsgemäßen wässrigen Dispersion beschichteten Substratfolie, zum Beispiel einer Polyesterfolie im Dickenbereich zwischen 6 und 100 $\mu$m, vorzugsweise zwischen 12 und 50 $\mu$m, und einer heißsiegelfähigen Folie, beispielsweise einer Polyethylenfolie einer Dicke zwischen 20 und 200 $\mu$m, vorzugsweise zwischen 25 und 75 $\mu$m, bestehen. Aus einem solchen Verbund können dann auch heißgesiegelte Verpackungsbeutel hergestellt werden, wobei die mit der erfindungsgemäßen Dispersion beschichtete Polyesterfolie auf der Außenseite des Verpackungsbeutels angeordnet ist. Für eine derartige Anwendung kann dann auch mit üblichen bekannten Mitteln antistatisch ausgerüstete Polyethylenfolie als Siegelfolie verwendet werden.

Durch die Verwendung geeigneter heißsiegelfähiger Bindemittel kann mit der erfindungsgemäßen wässrigen Dispersion auch die heißsiegelfähige Folie selbst beschichtet und auf diese Weise antistatisch ausgerüstet werden. Man erhält so beidseitig antistatisch beschichtete, heißsiegelfähige Verbundfolien, die z. B. zu Beuteln weiterverarbeitet werden können.

Eine weitere sehr vorteilhafte Anwendung der erfindungsgemäßen Dispersion ist die Beschichtung metallisierter Folien. Bei den im Handel üblichen metallisierten Folien, insbesondere metallisierten Polyester- oder Polypropylenfolien, sind vorzugsweise Aluminiumschichten im Vakuumaufdampfverfahren im Dickenbereich zwischen 10 und 200 nm aufgebracht. Optisch transparente Metallschichten mit optischen Transparenzwerten oberhalb ca. 30 % werden bei Schichtdicken unterhalb 20 nm erzielt. Die Oberflächenwiderstände solcher transparenter Schichten liegen zwischen ca. 30 und

200 Ohm. Beschichtet man eine derartige Folie rückseitig, das heißt auf der nicht mit der Metallisierung überzogenen Seite, mit der erfindungsgemäßen wässrigen Dispersion und kaschiert man diese Folie mit der Metallseite gegen eine heißsiegelfähige Folie, z. B. aus Polyethylen, so erhält man ein Laminat, das wie oben beschrieben zu heißgesiegelten Verpackungsbeuteln verarbeitet werden kann. Die innenliegende Metallschicht bewirkt dabei zusätzlich eine abschirmende Wirkung gegen hochfrequente Wechselfelder.

Die Vorteile der mit Hilfe der oben beschriebenen wässrigen Dispersionen aufgebrachten Antistatikschichten gegenüber konventionellen, sogenannten chemischen Antistatika (z. B. Fettsäureester, quartäre Ammoniumsalze, Amine etc.) liegen vornehmlich in den deutlich niedrigeren Oberflächenwiderständen (unterhalb $10^9$ Ohm) und der Unabhängigkeit der Antistatikwirkung von der umgebenden Luftfeuchte. Außerdem ist die bei chemischen Antistatika häufig vorhandene korrosive Wirkung auf Metalle (z. B. bei Leiterplatten) bei den erfindungsgemäßen Schichten nicht zu beobachten.

Die nachfolgenden Ausführungsbeispiele sollen die Erfindung noch eingehender verdeutlichen, ohne sie jedoch auf die explizit dargestellten Ausführungsformen zu beschränken.

Beispiel 1

18 g elektrisch leitfähiges Polyethoxythiophen (beschrieben in Beispiel 1 der EP-A-0 257 573, spezifische elektrische Leitfähigkeit: 0,85 S/cm) und 102 g eines in Wasser dispergierbaren Copolyesters mit ca. 90 Mol-% Isophthalsäure und 10 Mol-% Natriumsalz der 5-Sulfoisophthalsäure als Säurekomponente und 100 Mol-% Ethylenglykol als Glykolkomponente (beschrieben in EP-A-0 144 878) wurden in 376 g N-methyl-pyrrolidon (NMP) bei 60 °C gelöst. Die Lösung wurde dann tropfenweise in 1 488 g Wasser (80 bis 90 °C) zusammen mit 10 g (R)Surfynol 104 (Netzmittel der Fa. Air Products) unter permanentem Rühren zugegeben. Die entstandene Dispersion weist einen Gesamtfeststoffgehalt von 7 Gew.-% auf; das relative Mengenverhältnis des leitfähigen Polyethoxythiophens zum verwendeten Bindemittel beträgt 15 : 85. Das Mengenverhältnis Wasser zu NMP beträgt 80 : 20.

Mit dieser Dispersion wurde eine Polyesterfolie (Hostaphan RN 36, Breite 340 mm) mittels Glattwalzenantrag (gegenläufig mit Luftbürste) kontinuierlich beschichtet und bei 125 °C im Umluftkanal getrocknet.

Die beschichtete Folie zeigt einen Oberflächenwiderstand von $5 \cdot 10^7$ Ohm (DIN 53482 mittels Federzungenelektrode), eine Transparenz von 79 % (ASTM 1003-61) und eine Trübung von 14,5 % (ASTM 1003-61). Die Kratzfestigkeit der Schicht entspricht der Bleistifthärte 1H (ASTM 3363). Rasterelektronenmikroskopische Aufnahmen zeigen eine Feinheit der Dispersionspartikel in der getrockneten Schicht von im Mittel kleiner als 100 nm.

Beispiel 2

0,53 g elektrisch leitfähiges Polyethoxythiophen aus Beispiel 1 wird bei Raumtemperatur in 12,1 g NMP gelöst und mit 0,18 g (R)Surfynol 104 versetzt. 20 g (R)Zinpol 1519 (ein mit 24 % Feststoffgehalt in Wasser dispergiertes Acrylharz, erhältlich bei der Fa. Worlée-Chemie) wird mit 28 g Wasser verdünnt; anschließend werden 0,12 g (R)Triton X100 (Verlaufmittel, Fa. Rohm und Haas) hinzugegeben. In die wässrige Phase wird die NMP-Lösung dann tropfenweise eingearbeitet. Die fertige Dispersion enthält 80 % Wasser und 20 % NMP, der Feststoffgehalt beträgt ca. 8,5 Gew.-%, das Mengenverhältnis Polyethoxythiophen / (R)Zinpol 1519 beträgt 1 : 9.

Diese Dispersion wurde dann mittels eines Drahtrakels auf eine coronavorbehandelte Polyesterfolie (Hostaphan RN 25) aufgetragen und bei 120 °C 2 min im Umlufttrockenschrank getrocknet. Es konnte ein Oberflächenwiderstand von $3 \cdot 10^7$ Ohm bei einer Transparenz von 81 % erzielt werden. Haftung und Wischfestigkeit waren gut, die Kratzfestigkeit betrug 1H.

Beispiel 3

Ein 200 x 300 mm großes Muster einer gemäß Beispiel 1 einseitig antistatisch beschichteten Polyesterfolie (Dicke: 36 µm, Transparenz 79 %, Oberflächenwiderstand der beschichteten Seite: $5 \cdot 10^7$ õ) wurde mit einer einlagigen Folie aus low density Polyethylen (LDPE) einer Dicke von 50 µm kleberkaschiert. Dazu wurde die nicht beschichtete Seite der Polyesterfolie mittels eines 12 µm Handrakels mit einem Zweikomponentenkleber auf Polyurethanbasis beschichtet, mit der LDPE-Folie zusammengelegt und über eine Zeit von einer Minute im Umluftofen bei 40 °C getrocknet. Die Transparenz des so erhaltenen Folienlaminates betrug 77 %, die Verbundhaftung wurde mit einem T-peel Test bestimmt und betrug 4 N/15 mm Streifenbreite. Aus dem hergestellten Folienlaminat wurden heißgesiegelte Beutel hergestellt, wobei die antistatische Beschichtung auf der Polyesterfolie auf der Außenseite der Beutel angeordnet war. Die Polyethylenseiten des Laminates wurden mit einem Niederdruckheißsiegelgerät bei 160 °C über eine Zeit von 0,5 s mit 0,15 bar heißgesiegelt. Die Siegelnahtfestigkeit wurde nach der T-peel Testmethode bestimmt und betrug 25 N/15 mm Streifenbreite.

**Patentansprüche**

1. Wässrige Dispersion enthaltend elektrisch leitfähiges (dotiertes) Polyalkoxythiophen, das in aprotischen organischen Lösemitteln löslich ist, wobei die Dispersion einen Restlösemittelgehalt von kleiner/gleich 25 Gew.-% aufweist, bezogen auf das Gesamtgewicht der Dispersion.

2. Dispersion nach Anspruch 1, dadurch gekennzeichnet, daß das elektrisch leitfähige Polyalkoxythiophen sich aus Struktureinheiten der Formel:

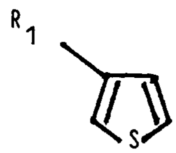

zusammensetzt, worin $R_1$ eine $C_1$-$C_{12}$-, vorzugsweise $C_1$-$C_4$-Alkoxygruppe bedeutet und die Monomereinheiten in 2- und/oder 5-Stellung miteinander verbunden sind.

3. Dispersion nach Anspruch 1 und 2, dadurch gekennzeichnet, daß sie zusätzlich wenigstens ein nicht leitfähiges Bindemittel enthält, das in Wasser dispergierbar oder löslich ist.

4. Verfahren zur Herstellung der Dispersion nach einem der Ansprüche 1 bis 3, dadurch gekennzeichnet, daß das elektrisch leitfähige Polyalkoxythiophen zunächst in wenigstens einem dipolar, aprotischen Lösemittel gelöst wird und daß die Lösung dann in Wasser dispergiert wird.

5. Verfahren zur Herstellung der Dispersion nach Anspruch 3, dadurch gekenzeichnet, daß das Bindemittel zunächst in Wasser und/oder in einem Lösemittel dispergiert oder gelöst wird.

6. Verwendung einer Dispersion nach einem der Ansprüche 1 bis 3 zum Beschichten von Substraten, insbesondere Folien, mit elektrisch leitfähigen bzw. antistatischen Überzügen.

7. Verwendung gemäß Anspruch 6 zum Beschichten von Folien aus Polyester, Polypropylen, Polyvinylchlorid, Polyethylen, Polyamid oder Polyacetat.

8. Verwendung der nach Anspruch 7 beschichteten Folien zur Herstellung von Verbundfolien, wobei die Folien zusätzliche funktionelle Schichten, insbesondere Metallschichten, tragen können.

9. Verwendung einer Dispersion nach einem der Ansprüche 1 bis 3 zur Herstellung von Siegelrandbeuteln speziell für antistatische und/oder elektktromagnetisch abschirmende Verpackungen für elektrische Bauteile, -gruppen und Leiterplatten.